# EUROPÄISCHE PATENTSCHRIFT

(11) **EP 3 895 302 B1**
(45) Veröffentlichungstag und Bekanntmachung des Hinweises auf die Patenterteilung: **23.09.2026**
(21) Anmeldenummer: 19817152.2
(22) Anmeldetag: 03.12.2019
(51) Int. Cl.: H02P 6/00, H02P 21/00

(54) **ANTRIEB MIT EINEM VON WECHSELRICHTER GESPEISTEN ELEKTROMOTOR**
DRIVE WITH AN INVERTER FED ELECTRIC MOTOR
ENTRAÎNEMENT PAR MOTEUR ÉLECTRIQUE ALIMENTÉ PAR UN ONDULEUR

(30) Priorität: 13.12.2018 DE 102018009681
(43) Veröffentlichungstag der Anmeldung: 20.10.2021
(73) Patentinhaber: SEW-EURODRIVE GmbH & Co. KG, 76646 Bruchsal (DE)
(72) Erfinder: HECKER, Christian, 76694 Forst (DE)
(86) Internationale Anmeldenummer: PCT/EP2019/025429
(87) Internationale Veröffentlichungsnummer: WO 2020/119939

(56) Entgegenhaltungen:
- DE-A1- 10 203 943
- DE-A1- 102012 201 200
- DE-A1- 102012 201 562
- DE-T5- 112006 001 287

## Beschreibung

Die Erfindung betrifft ein Verfahren zum Betreiben eines von einem Wechselrichter gespeisten Elektromotors.

Es ist allgemein bekannt, dass bei Elektromotoren eine Vektorregelung ausführbar ist. Dabei wird ein drehmomentbildender Stromanteil auf einen Sollwert und ein flussbildender Stromanteil auf einen zweiten Sollwert hin geregelt.

Aus der DE 10 2012 201 200 A1 ist der nächstliegende Stand der Technik eine Fahrzeug-Motorsteuervorrichtung bekannt.

Aus der DE 11 2006 001 287 T5 ist eine Elektromotor-Steuervorrichtung bekannt.

Aus der DE 102 03 943 A1 ist eine Vorrichtung zum Regeln der Drehzahl eines Motors bereitgestellt, die in der Lage ist, die Drehzahl und das Drehmoment des Motors durch Erfassen der Anspeisungsspannung und des Anspeisungsstroms des Motors ohne Verwendung eines Fühlers zum Erfassen der Stellung des Rotors des Motors zu regeln. Die Vorrichtung zum Regeln der Drehzahl eines Motors umfasst einen Synchron/ Stationär-Koordinaten-Umsetzer zum Vergleichen der Solldrehzahl eines Motors mit der berechneten Drehzahl des Motors und zum Ausgeben der Sollmagnetflussstromkomponente und der Solldrehmomentstromkomponente zum Kompensieren eines Fehlerwerts gemäß dem Ergebnis des Vergleichs als die Sollspannung einer alpha-Achse und die Sollspannung einer beta-Achse in einem stationären Koordinatensystem, einen Zweiphasen-Stromgenerator zum Empfangen eines dreiphasigen Stroms, der erfasst wird, wenn sich der Motor dreht, und zum Ausgeben der Magnetflussstromkomponente und der Drehmomentstromkomponente, einen Drehzahl/Stellungsberechnungsgeber zum Berechnen der Stellung und der Drehzahl eines Rotors im Motor auf der Grundlage der Sollspannung der alpha-Achse, der Sollspannung der beta-Achse, des Stroms der alpha-Achse, des Stroms der beta-Achse und der Solldrehzahl und zum Regeln der Drehzahl und des Drehmoments des Motors.

Aus der DE 10 2012 201562 A1 ist eine Reglerstruktur zum Positionieren einer Last mittels eines elektrischen Motors angegeben, die eine Einrichtung zur aktiven Dämpfung unerwünschter niederfrequenter Schwingungen aufweist. Die Reglerstruktur weist einen Lageregler, einen Geschwindigkeitsregler und einen Stromregler auf, die zusammen einen kaskadierten Regelkreis bilden. Dem Regelkreis sind Dämpfungssignale aufgeschaltet, die unerwünschten niederfrequenten Schwingungen entgegen wirken, wobei wenigstens ein erstes und ein zweites Dämpfungssignal unterschiedlicher Phasenlage aus einem einzigen Sensorsignal abgeleitet sind, und wobei das erste Dämpfungssignal zwischen Lageregler und Geschwindigkeitsregler aufgeschaltet ist, und dass das zweite Dämpfungssignal zwischen Geschwindigkeitsregler und Stromregler aufgeschaltet ist.

Der Erfindung liegt daher die Aufgabe zugrunde, einen Antrieb mit einem von einem Wechselrichter gespeisten Elektromotor weiterzubilden, wobei ein stabileres Regelverhalten des Antriebs erreicht werden soll.

Erfindungsgemäß wird die Aufgabe bei dem Antrieb mit einem von einem Wechselrichter gespeisten Elektromotor nach den in Anspruch 1 angegebenen Merkmalen gelöst.

Wichtige Merkmale der Erfindung bei dem Antrieb mit einem einem Wechselrichter gespeisten Elektromotor sind, dass die Winkelposition des Rotors des Elektromotors, insbesondere mittels eines Sensors, erfasst wird und aus den erfassten Werten die Winkelistgeschwindigkeit des Rotors bestimmt wird,

wobei die Differenz zwischen einem Winkelgeschwindigkeitssollwert und der bestimmten Winkelistgeschwindigkeit einem Reglerglied zugeführt wird,
wobei die bestimmte Winkelgeschwindigkeit einer Hochpasseinheit zugeführt, deren Ausgangssignal mit einem Faktor (K_1) multipliziert wird und das so entstandene Produkt der Stellgröße des Reglerglieds aufaddiert wird und die so gebildete Summe als Drehmomentsollwert einer Reglereinheit, insbesondere Motorführung zur Durchführung einer Vektorregelung, zugeführt wird,
wobei die Reglereinheit eine derartige Spannung dem Elektromotor zur Verfügung stellt zur Erreichung des Drehmomentsollwerts,
insbesondere wobei ein von der Reglereinheit bestimmter Drehmomentistwert auf den Drehmomentsollwert hingeregelt wird.

Von Vorteil ist dabei, dass ein einfacher Drehzahlregler verwendbar ist, der infolge seiner praktischen Realisierung eine Grenzfrequenz aufweist, oberhalb derer Störungen, insbesondere Resonanzschwingungen, nicht ausregelbar sind. Denn durch den Hochpass werden solche oberhalb der Grenzfrequenz des Drehzahlreglers auftretenden Störungen direkt dem Stellwert des Drehzahlreglers aufaddiert unter Berücksichtigung eines Faktors K1, der vorzugsweise konstant ist. Somit ist des dem nachgeordneten Stromregler ermöglicht, diese Störungen wegzuregeln, also zu unterdrücken.

Bei einer vorteilhaften Ausgestaltung weist die Hochpasseinheit zumindest zwei in Reihe geschaltete Hochpässe auf, insbesondere deren untere Grenzfrequenz sich zumindest um einen Faktor, der einen Wert zwischen 1 und 10 aufweist, unterscheidet. Von Vorteil ist dabei, dass in einfacher Weise eine verbesserte Abdämpfung einer Resonanzüberhöhung erreichbar ist. Außerdem sind einfach realisierbare, insbesondere analoge, Hochpässe verwendbar.

Bei einer vorteilhaften Ausgestaltung weist die Motorführung einen ersten Regler auf, welcher den drehmomentbildenden Anteil des Motorstroms auf einen Sollwert hin regelt, insbesondere wobei der Sollwert aus dem Drehmomentsollwert gebildet wird,

wobei die Motorführung einen zweiten Regler aufweist, welcher den flussbildenden Anteil des Motorstroms auf einen Sollwert hin regelt. Von Vorteil ist dabei, dass eine Vektorregelung des Elektromotors, insbesondere eines Asynchronmotors oder eines Synchronmotors, ausführbar ist.

Bei einer vorteilhaften Ausgestaltung liegt die untere Grenzfrequenz der Hochpasseinheit oder der Hochpässe oberhalb der Grenzfrequenz des Reglerglieds, insbesondere sich um einen Faktor zwischen 1 und 10 von der Grenzfrequenz des Reglerglieds unterscheidet, oder ihr gleicht. Von Vorteil ist dabei, dass Resonanzen mittels des Hochpasses durchgeleitet werden, welche vom Drehzahlregler nicht mehr bedämpfbar wären.

Bei einer vorteilhaften Ausgestaltung ist die Hochpasseinheit als Hochpass ausgeführt, dessen Grenzfrequenz gleich oder oberhalb der Grenzfrequenz des Reglerglieds angeordnet ist. Von Vorteil ist dabei, dass eine einfache Realisierung vorsehbar ist, da die faktische Tiefpasswirkung der Vektorregelung extrem hohe Frequenzen unterdrückt.

Bei einer vorteilhaften Ausgestaltung weist der Faktor K1 oberhalb eines Schwellwertes der Amplitude des Ausgangssignals der Hochpasseinheit einen konstanten, nicht verschwindenden Wert auf und unterhalb des Schwellwertes einen betragsmäßig kleineren Wert, insbesondere unterhalb des Schwellwertes einen verschwindenden Wert aufweist, also Null ist. Von Vorteil ist dabei, dass nur bei gefährlichen Resonanzen der über die

Hochpasseinheit bewirkte Eingriff in die Regelung wirksam ist. Somit ist die Sicherheit gegen sich aufschwingende Resonanzen des Antriebsstrangs erhöht, aber die Regelung ansonsten ungestört ausführbar. Vorzugsweise wird die Funktion mit Hysterese um den Schwellwert herum ausgeführt, so dass ein verbessertes Verhalten im Bereich um den Schwellwert herum erreichbar ist und kein Aufschwingen erzeugt wird.

Bei einer vorteilhaften Ausgestaltung wird auch die lastseitige Winkelgeschwindigkeit erfasst, so dass dann auch die Differenz der lastseitigen und motorseitigen Winkelgeschwindigkeit aus den gemessenen Größen bestimmbar ist. zur Bedämpfung von Resonanzschwingungen wird dann diese Differenz einem weiteren Reglerglied, insbesondere linearem Reglerglied, zugeführt, dessen Stellwert gefiltert, insbesondere mittels Tiefpass gefiltert, und dann mit einem Faktor multipliziert dem Stellwert des Reglerglieds des Stromreglers aufaddiert wird. Von Vorteil ist dabei, dass ein verbessertes Bedämpfen von tieffrequenten Resonanzen schnell erreichbar ist.

Wichtige Merkmale bei dem Antrieb zur Durchführung eines vorgenannten Verfahrens sind, dass der Wechselrichter einen Hochpass aufweist, dem Signale eines Mittels zur Bestimmung der Winkelgeschwindigkeit zugeführt werden und dessen Ausgangssignal von einem Summierungsmittel dem von einem Drehzahlregler bestimmten Stellwert aufsummiert wird,
wobei das Ausgangssignal des Summierungsmittels als Sollwert für einen Stromregler der Vektorregelungseinheit, insbesondere Motorführung, des Antriebs des drehmomentbildenden Stromanteils zugeführt wird.

Von Vorteil ist dabei, dass eine einfache Ausführung erreichbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:

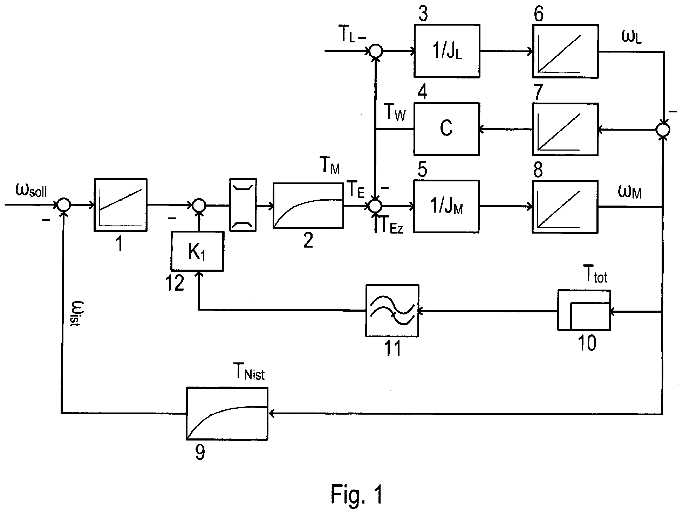

In der Figur 1 ist ein erfindungsgemäßes Antriebssystem als regelungstechnisch abstrahiert dargestellt.

Das Antriebssystem weist einen umrichtergespeisten Elektromotor auf, wobei die Signalelektronik des Umrichters einen Drehzahlregler aufweist, welcher ein Reglerglied 1 aufweist, dem eine Regelabweichung zwischen einer Solldrehzahl ω_Soll und einer Istdrehzahl w_ist zugeführt wird. Dabei wird die Istdrehzahl ω_ist aus dem Verlauf der von einem Sensor erfassten Werte der Winkellage des Rotors des Elektromotors bestimmt.

Der Sensor ist dabei am Elektromotor angeordnet. Vom Motor wird eine Last angetrieben, welche ein Trägheitsmoment J_L aufweist.

Das Reglerglied 1 ist vorzugsweise als lineares Reglerglied ausgeführt. Vorzugsweise ist der Drehzahlregler ein PI-Regler oder ein PID-Regler.

Dem so begrenzten Soll-Drehmoment wird erfindungsgemäß ein um den Faktor K_1 multipliziertes Ausgangssignal eines Hochpasses 11 subtrahiert.

Das Ergebnis dieser Subtraktion wird der Motorführung 2 als Soll-Drehmoment zugeleitet, wobei die Motorführung das Soll-Drehmoment zu erreichen versucht, indem sie eine entsprechende Spannung dem Elektromotor zur Verfügung stellt.

Die Motorführung 2 weist einen Regler für den drehmomentbildenden Anteil des Motorstroms sowie einen Regler für den flussbildenden Anteil des Motorstroms auf. Die Stellgrößen der beiden Regler werden zur Bestimmung der vom Umrichter bereit zu stellenden Motorspannung verwendet.

Eingangsseitig weist die Motorführung ein Begrenzungsmittel auf, welches die eingangsseitig der Motorführung 2 zugeführte Soll-Drehmoment wertemäßig begrenzt.

Insgesamt weist die Motorführung ein Tiefpassverhalten auf, so dass in Figur 1 die Motorführung 2 als PT1-Glied dargestellt ist.

Das vom Elektromotor erzeugte Drehmoment T wirkt einerseits auf das Trägheitsmoment J_M des Rotors des Elektromotors und andererseits wirkt es aber auch auf das Trägheitsmoment J_L der Last, wobei eine Rückwirkung mit der Torsionskonstante C des Antriebsstrangs ebenso mitzuberücksichtigen wie das gegebenenfalls lastseitig eingebrachte Drehmoment J_L.

Zu den Konstanten 1/J_L., 1/ J_M und C gehörig sind die Integrierglieder 6, 7 und 8 in Figur 1 dargestellt.

Die Differenz zwischen der Winkelgeschwindigkeit ω_L der Last und der Winkelgeschwindigkeit ω_M des Rotors des Elektromotors wird dem Integrierglied 7 zugeführt, dessen Ausgangssignal mit dem Wert C der Proportionalitätskonstanten multipliziert wird.

Aus den mit dem Sensor erfassten Werten wird die Winkelgeschwindigkeit ω_M des Rotors bestimmt. Bei dieser Erfassung und Bestimmung ist ein PT1-Verhalten zu berücksichtigen, was in Figur 1 mit dem Bezugszeichen 9 und der Zeitkonstanten T_Nist gekennzeichnet ist.

Erfindungsgemäß wird die bestimmte Winkelgeschwindigkeit ω_M unter Berücksichtigung einer Totzeit T_tot einem Hochpass 11 zugeführt, dessen Ausgangssignal mit dem Faktor K1 multipliziert wird und das so entstandene Produkt dem als Stellgröße des Reglerglieds 1 fungierenden Sollwert für Drehmoment aufaddiert wird.

Dabei weist das Reglerglied 1 ein akzeptables Regelverhalten unterhalb einer Grenzfrequenz von beispielsweise 30 Hz oder 50 Hz auf. Oberhalb dieser Grenzfrequenz ist das Regelverhalten ungenügend, also ein Erreichen des Sollwertes unwahrscheinlich.

Die Totzeit T_tot des Totzeitglieds 10 beträgt beispielsweise 250µs. Somit werden Frequenzen im Beriech von oberhalb 1kHz mit einer erheblichen Phasenverschiebung bei der Erfassung der Winkelwerte und Bestimmung der Winkelgeschwindigkeit ω_M versehen.

Der Hochpass 11 weist eine Grenzfrequenz auf, welche der Grenzfrequenz des Reglerglieds 1 des Stromreglers gleicht. Wenn dessen Grenzfrequenz beispielhaft 50 Hz beträgt, ist dieser Wert als der Wert der Grenzfrequenz des Hochpasses gewählt.

Bei Ausführung der Hochpasseinheit 11 als Serienschaltung zweier Hochpässe **wird** ein weiterer Hochpass mit einer eine Größenordnung, insbesondere mit einer zehnfach, größeren Grenzfrequenz vorgesehen. Im Beispiel wäre dies ein Hochpass mit einer Grenzfrequenz von 500 Hz.

Somit wird Resonanzschwingungen im Bereich von einigen Hundert Hertz, beispielsweise aus dem Bereich zwischen 100 Hz und 400 Hz zwar vom Reglerglied 1 nicht mehr entgegengewirkt, aber über den Hochpass 11 werden diese Resonanzschwingungen zum Drehmomentsollwert durchgeleitet und auf diese Weise der Motorführung 2 zugeleitet, die zwar auch ein Tiefpassverhalten hat, also oberhalb einer Grenzfrequenz kein Regeln des Motors erreichbar macht aber eine viel höhere Grenzfrequenz aufweist als die Grenzfrequenz des Reglerglieds 1.

Beispielsweise liegt die Grenzfrequenz der Motorführung 2 beim Zehnfachen oder höher als die Grenzfrequenz des Reglerglieds 1. Der genaue Wert hängt hier wesentlich ab von der Stromreglerfrequenz. Bei einer Stromreglerfrequenz von 4 kHz liegt die Eckfrequenz der Motorführung 2 bei etwa 300 Hz. Bei Verwendung anderer, insbesondere höherer Stromreglerfrequenzen liegt die Eckfrequenz bei bis zu 1000 Hz.

Die Grenzfrequenz bei der Signalerfassung, also der Kehrwert der Zeitkonstanten beim PT1-Glied 9, weist einen Wert im Beriech im Beriech zwischen 100 Hz und 300 Hz.

Auf diese Weise ist ein Ausregeln, also Abdämpfen von Resonanzschwingungen ermöglicht.

Bei weiteren erfindungsgemäßen Ausführungsbeispielen wird der Hochpass 11 durch eine Reihenschaltung zumindest zweier Hochpässe realisiert, wobei der erste dieser Hochpässe eine Grenzfrequenz aufweist, die der Eckfrequenz des Reglerglieds des Stromreglers gleicht, und der zweite dieser Hochpässe eine Grenzfrequenz aufweist, die das Zehnfache beträgt. Somit ist ein abgerundet, stufenartiger Frequenzgang ermöglicht.

Der Durchlassbereich des Hochpasses 11 ist oberhalb einer Grenzfrequenz angeordnet.

Die Motorführung umfasst beispielsweise auch die Erfassung des Motorstroms mit nachgeordneter Clarke-Parks-Transformation unter Berücksichtigung der erfassten Winkellagenwerte, so dass der drehmomentbildende Stromanteil und der flussbildende Stromanteil in einem rotorfesten Koordinatensystem bestimmbar sind und diese so bestimmten Istwerte von den beiden Stromreglern auf einen jeweiligen Sollwert hingeregelt werden, indem eine entsprechende Spannung im rotorfesten Koordinatensystem als vektorielle Stellgröße bestimmt wird. Nach Ausführung der inversen Clarke-Transformation wird von der Motorführung somit ein Motorspannungsraumzeiger bestimmt, welcher durch pulsweitenmoduliertes Ansteuern der Halbeliterschalter einer dreiphasigen Halbbrückenschaltung dem als Drehstrommotor ausgeführten Elektromotor zur Verfügung gestellt wird.

Erfindungsgemäß wird der Sollwert des Stromreglers für den drehmomentbildenden Stromanteil als Summe des von einem Drehzahlregler bereit gestellten insbesondere drehmomentwertigen Stellwertes und dem vom Hochpass 11 gelieferten und mit einem Faktor K1 multiplizierten Signalwert gebildet. Dabei ist der Faktor K1 konstant.

Bei weiteren erfindungsgemäßen Ausführungsbeispielen wird statt des konstanten Faktors K1 der Funktionswert einer Funktion der Amplitude verwendet, wobei die Funktion unterhalb eines Schwellwertes einen kleineren Wert aufweist als oberhalb des Schwellwertes. Oberhalb des Schwellwertes ist dabei wiederum ein konstanter Faktor K1 verwendet.

Unterhalb des Schwellwertes ist vorzugsweise der Funktionswert der Funktion Null. Somit werden nur gefährliche starke Resonanzschwingungen unterdrückt. Geringfügige Störgrößen in diesem Frequenzbereich bewirken keine besonderen Maßnahmen. Der Schwellwert definiert dabei den Übergang von geringfügig zu gefährlich.

### Bezugszeichenliste

1 Reglerglied
2 Motorführung
3 Proportionalglied
4 Proportionalglied
5 Proportionalglied
6 Integrierglied, insbesondere Integrator
7 Integrierglied, insbesondere Integrator
8 Integrierglied, insbesondere Integrator
9 PT1-Glied, insbesondere Tiefpass
10 Totzeitglied
11 Hochpass
12 Proportionalglied

## Patentansprüche

1. Antrieb mit einem von einem Wechselrichter gespeisten Elektromotor,
wobei der Wechselrichter einen Hochpass (11) aufweist, dem Signale eines Mittels zur Bestimmung der Winkelgeschwindigkeit ω_M zugeführt werden und dessen Ausgangssignal von einem Summierungsmittel dem von einem Drehzahlregler bestimmten Stellwert aufsummiert wird,
wobei das Ausgangssignal des Summierungsmittels als Sollwert für einen Stromregler der Vektorregelungseinheit, insbesondere Motorführung (2), des Antriebs des drehmomentbildenden Stromanteils zugeführt wird,
wobei der Antrieb einen Sensor zur Erfassung der Winkelposition des Rotors des Elektromotors aufweist und der Wechselrichter geeignet ausgeführt ist, aus den erfassten Werten die Winkelistgeschwindigkeit des Rotors zu bestimmen,
wobei der Wechselrichter derart eingerichtet ist, dass die Differenz zwischen einem Winkelgeschwindigkeitssollwert und der bestimmten Winkelistgeschwindigkeit einem ersten Reglerglied (1) zugeführt wird,
wobei die bestimmte Winkelgeschwindigkeit ω_M unter Berücksichtigung einer Totzeit T_tot dem Hochpass (11) zugeführt, dessen Ausgangssignal mit dem Faktor K1 multipliziert wird und das so entstandene Produkt dem als Stellgröße des Reglerglieds (1) fungierenden Sollwert für Drehmoment aufaddiert wird.

2. Antrieb nach Anspruch 1,
**dadurch gekennzeichnet, dass**
die bestimmte Winkelgeschwindigkeit auch einer Hochpasseinheit über ein Totzeitglied (10) zur Berücksichtrigung einer Totzeit T_tot zugeführt wird, deren Ausgangssignal mit einem Faktor (K_1) multipliziert wird und das so entstandene Produkt der Stellgröße des ersten Reglerglieds (1) aufaddiert wird und die so gebildete Summe als Drehmomentsollwert einer Reglereinheit, insbesondere Motorführung (2) zur Durchführung einer Vektorregelung, zugeführt wird,
wobei die Reglereinheit eine derartige Spannung dem Elektromotor zur Verfügung stellt zur Erreichung des Drehmomentsollwerts,
insbesondere wobei ein von der Reglereinheit bestimmter Drehmomentistwert auf den Drehmomentsollwert hingeregelt wird.

3. Antrieb nach einem der vorangegangenen Ansprüche,
**dadurch gekennzeichnet, dass**
die Hochpasseinheit zumindest zwei in Reihe geschaltete Hochpässe aufweist, insbesondere deren untere Grenzfrequenz sich zumindest um einen Faktor, der einen Wert zwischen 8 und 40 aufweist, unterscheidet.

4. Antrieb nach einem der vorangegangenen Ansprüche,
**dadurch gekennzeichnet, dass**
die Motorführung (2) einen ersten Regler aufweist, welcher den drehmomentbildenden Anteil des Motorstroms auf einen Sollwert hin regelt, insbesondere wobei der Sollwert aus dem Drehmomentsollwert gebildet wird,
wobei die Motorführung (2) einen zweiten Regler aufweist, welcher den flussbildenden Anteil des Motorstroms auf einen Sollwert hin regelt.

5. Antrieb nach einem der vorangegangenen Ansprüche,
**dadurch gekennzeichnet, dass**
die untere Grenzfrequenz der Hochpasseinheit oder der Hochpässe oberhalb der Grenzfrequenz des ersten Reglerglieds (1) liegt, insbesondere sich um einen Faktor zwischen 10 und 100 von der Grenzfrequenz des ersten Reglerglieds (1) unterscheidet, oder ihr gleicht.

6. Antrieb nach einem der vorangegangenen Ansprüche,
**dadurch gekennzeichnet, dass**
die Hochpasseinheit als Hochpass (11) ausgeführt ist, dessen Grenzfrequenz gleich oder oberhalb der Grenzfrequenz des ersten Reglerglieds (1) angeordnet ist.

7. Antrieb nach einem der vorangegangenen Ansprüche,
**dadurch gekennzeichnet, dass**
der Faktor K1 oberhalb eines Schwellwertes der Amplitude des Ausgangssignals der Hochpasseinheit einen konstanten, nicht verschwindenden Wert aufweist und unterhalb des Schwellwertes einen betragsmäßig kleineren Wert, insbesondere unterhalb des Schwellwertes einen verschwindenden Wert aufweist, also Null ist,
insbesondere wobei eine Hysterese um den Schwellwert herum ausgeführt ist.

8. Antrieb nach einem der vorangegangenen Ansprüche,
**dadurch gekennzeichnet, dass**
die lastseitige Winkelgeschwindigkeit mit einem Sensor erfasst wird oder aus den mit einem Sensor erfassten Winkelwerten bestimmt wird,
wobei die Differenz zwischen der lastseitigen Winkelgeschwindigkeit und der motorseitigen Winkelgeschwindigkeit einem weiteren Reglerglied (1), insbesondere einem linearen Reglerglied (1), zugeführt wird, dessen Stellwert gefiltert, insbesondere mit einem Tiefpass (9) gefiltert, mit einem zweiten, insbesondere konstanten, Faktor multipliziert wird und das Ergebnis der Multiplikation dem Stellwert des ersten Reglerglieds (1) des Stromreglers aufaddiert wird, insbesondere zur Bedämpfung von Resonanzüberhöhungen.

9. Antrieb nach Anspruch 8,
**dadurch gekennzeichnet, dass**
der zweite Faktor oberhalb eines weiteren Schwellwertes des Stellwertes des weiteren Reglerglieds (1) einen zweiten konstanten, nicht verschwindenden Wert aufweist und unterhalb des weiteren Schwellwertes einen betragsmäßig kleineren Wert, insbesondere unterhalb des Schwellwertes einen verschwindenden Wert aufweist, also Null ist.

10. Antrieb nach Anspruch 9,
**dadurch gekennzeichnet, dass**
eine Hysterese um den weiteren Schwellwert herum ausgeführt ist.

## Claims

1. Drive comprising an electric motor fed by an inverter,
wherein the inverter has a high-pass filter (11) to which signals of a means for determining the angular velocity ω_M are supplied and of which the output signal is added, by a summing means, to the manipulated value determined by a speed controller,
wherein the output signal of the summing means is supplied as a desired value for a current controller of the vector control unit, in particular the motor control unit (2), of the drive of the torque-generating current fraction,
wherein the drive has a sensor for detecting the angular position of the rotor of the electric motor, and the inverter is suitably configured to determine the actual angular velocity of the rotor from the detected values,
wherein the inverter is configured such that the difference between a desired angular velocity value and the determined actual angular velocity is supplied to a first controller element (1),
wherein the determined actual angular velocity ω_M is supplied, taking into account a delay T_tot, to the high-pass filter (11), the output signal of which is multiplied by the factor K1, and the resulting product is added to the desired torque value acting as the manipulated variable of the controller element (1).

2. Drive according to claim 1,
**characterised in that**
the determined angular velocity is also supplied to a high-pass filter unit via a delay element (10) to take a delay T_tot into account, the output signal of said high-pass filter unit being multiplied by a factor (K_1), and the resulting product is added to the manipulated variable of the first controller element (1), and the sum thus formed is supplied as a desired torque value to a controller unit, in particular a motor control unit (2) for carrying out vector control, the controller unit providing the electric motor with such a voltage that the desired torque value is reached,
an actual torque value determined by the controller unit in particular being controlled towards the desired torque value.

3. Drive according to any of the preceding claims,
**characterised in that**
the high-pass filter unit has at least two high-pass filters wired in series, of which the lower cut-off frequencies in particular differ at least by a factor having a value between 8 and 40.

4. Drive according to any of the preceding claims,
**characterised in that**
the motor control unit (2) has a first controller which controls the torque-generating fraction of the motor current towards a desired value, the desired value in particular being generated from the desired torque value,
the motor control unit (2) having a second controller which controls the flux-generating fraction of the motor current towards a desired value.

5. Drive according to any of the preceding claims,
**characterised in that**
the lower cut-off frequency of the high-pass filter unit or of the high-pass filters is above the cut-off frequency of the first controller element (1), in particular differs from the lower cut-off frequency of the first controller element (1) by a factor between 10 and 100, or is equal thereto.

6. Drive according to any of the preceding claims,
**characterised in that**
the high-pass filter unit is formed as a high-pass filter (11) of which the cut-off frequency is provided either at the same level as or above the cut-off frequency of the first controller element (1).

7. Drive according to any of the preceding claims,
**characterised in that**
above a threshold value of the amplitude of the output signal of the high-pass filter unit, the factor K1 has a constant, non-negligible value, and below said threshold value it has a lower value in terms of magnitude, in particular it has a vanishing value below said threshold value, i.e. is zero,
hysteresis in particular being formed around the threshold value.

8. Drive according to any of the preceding claims,
**characterised in that**
the load-side angular velocity is detected by a sensor or is determined from the angle values detected by a sensor,
the difference between the load-side angular velocity and the motor-side angular velocity being supplied to a further controller element (1), in particular a linear controller element (1), the manipulated value of which is filtered, in particular filtered by a low-pass filter (9), and multiplied by a second, in particular constant, factor, and the result of the multiplication is added to the manipulated value of the first controller element (1) of the current controller, in particular in order to damp resonance sharpness.

9. Drive according to claim 8,
**characterised in that**
above a further threshold value of the manipulated value of the further controller element (1), the second factor has a second constant, non-negligible value, and below said further threshold value it has a lower value in terms of magnitude, in particular it has a vanishing value below said threshold value, i.e. is zero.

10. Drive according to claim 9,
**characterised in that**
hysteresis is formed around the further threshold value.

## Revendications

1. Entraînement avec un moteur électrique alimenté par un onduleur,
dans lequel
l'onduleur comprend un filtre passe-haut (11), auquel sont fournis des signaux d'un moyen de détermination de la vitesse angulaire ω_M et dont le signal de sortie est additionné par un moyen de sommation à la valeur de consigne déterminée par un régulateur de vitesse de rotation,
dans lequel le signal de sortie du moyen de sommation est fourni comme valeur de consigne à un régulateur de courant de l'unité de régulation vectorielle, en particulier la commande de moteur (2), de l'entraînement de la composante de courant générant le couple,
dans lequel l'entraînement comprend un capteur pour la détection de la position angulaire du rotor du moteur électrique et l'onduleur est configuré de manière appropriée pour, à partir des valeurs détectées, déterminer la vitesse angulaire réelle du rotor,
dans lequel l'onduleur est agencé de sorte que la différence entre une valeur de consigne de la vitesse angulaire et la vitesse angulaire réelle déterminée est fournie à un premier élément régulateur (1),
dans lequel la vitesse angulaire déterminée ω_M, en tenant compte d'un temps mort T_tot, est fournie au filtre passe-haut (11), dont le signal de sortie est multiplié par le facteur K1 et le produit ainsi obtenu est additionné à la valeur de consigne pour le couple servant de grandeur de commande de l'élément régulateur (1).

2. Entraînement selon la revendication 1,
**caractérisé en ce que**
la vitesse angulaire déterminée est également fournie à une unité de filtre passe-haut via un élément de temps mort (10) pour la prise en compte d'un temps mort T_tot dont le signal de sortie est multiplié par un facteur (K_1) et le produit ainsi obtenu est additionné à la grandeur de commande du premier élément régulateur (1), et la somme ainsi formée est fournie comme valeur de consigne du couple à une unité de régulation, en particulier la commande de moteur (2) pour la réalisation d'une régulation vectorielle,
dans lequel l'unité de régulation fournit une telle tension au moteur électrique pour atteindre la valeur de consigne du couple,
en particulier dans lequel une valeur réelle du couple déterminée par l'unité de régulation est asservie à la valeur de consigne du couple.

3. Entraînement selon l'une des revendications précédentes, **caractérisé en ce que** l'unité de filtre passe-haut comprend au moins deux filtres passe-haut connectés en série, en particulier dont la fréquence limite inférieure diffère au moins par un facteur ayant une valeur comprise entre 8 et 40.

4. Entraînement selon l'une des revendications précédentes, **caractérisé en ce que** la commande de moteur (2) comprend un premier régulateur, qui asservit la composante générant le couple du courant moteur à une valeur de consigne, en particulier dans lequel la valeur de consigne est formée à partir de la valeur de consigne du couple,
dans lequel la commande de moteur (2) comprend un second régulateur, qui asservit la composante générant le flux du courant moteur à une valeur de consigne.

5. Entraînement selon l'une des revendications précédentes, **caractérisé en ce que** la fréquence limite inférieure de l'unité de filtre passe-haut ou des filtres passe-haut se situe au-dessus de la fréquence limite du premier élément régulateur (1), en particulier diffère de la fréquence limite du premier élément régulateur (1) par un facteur compris entre 10 et 100, ou lui est égale.

6. Entraînement selon l'une des revendications précédentes, **caractérisé en ce que** l'unité de filtre passe-haut est réalisée comme filtre passe-haut (11), dont la fréquence limite est disposée égale ou au-dessus de la fréquence limite du premier élément régulateur (1).

7. Entraînement selon l'une des revendications précédentes, **caractérisé en ce que** le facteur K1 présente une valeur constante, non nulle, au-dessus d'un seuil de l'amplitude du signal de sortie de l'unité de filtre passe-haut, et une valeur de valeur absolue inférieure au-dessous du seuil, en particulier au-dessous du seuil une valeur nulle,
en particulier dans lequel une hystérésis est réalisée autour du seuil.

8. Entraînement selon l'une des revendications précédentes, **caractérisé en ce que** la vitesse angulaire côté charge est détectée avec un capteur ou déterminée à partir des valeurs angulaires détectées avec un capteur,
dans lequel la différence entre la vitesse angulaire côté charge et la vitesse angulaire côté moteur est fournie à un autre élément régulateur (1), en particulier à un élément régulateur linéaire
élément régulateur (1), dont la valeur de consigne est filtrée, en particulier filtrée avec un filtre passe-bas (9), multipliée par un second facteur, en particulier constant, et le résultat de la multiplication est additionné à la valeur de consigne du premier élément régulateur (1) du régulateur de courant, en particulier pour l'amortissement des amplifications de résonance.

9. Entraînement selon la revendication 8, **caractérisé en ce que** le second facteur présente une seconde valeur constante, non nulle, au-dessus d'un autre seuil de la valeur de consigne de l'autre élément régulateur (1) et au-dessous de l'autre seuil une valeur de valeur absolue inférieure, en particulier au-dessous du seuil une valeur nulle.

10. Entraînement selon la revendication 9, **caractérisé en ce qu'** une hystérésis est réalisée autour de l'autre seuil.
